Europäisches Patentamt

European Patent Office

Office européen des brevets

(11) Publication number: **0 156 828**
**B1**

# EUROPEAN PATENT SPECIFICATION

(45) Date of publication of patent specification: **14.06.89**    (51) Int. Cl.⁴: **B 29 C 39/10**

(21) Application number: **84903319.6**

(22) Date of filing: **04.09.84**

(86) International application number:
**PCT/US84/01348**

(87) International publication number:
**WO 85/01472 11.04.85 Gazette 85/09**

(54) **CONTAINER PORT AND METHOD.**

(30) Priority: **28.09.83 US 536608**

(43) Date of publication of application:
**09.10.85 Bulletin 85/41**

(45) Publication of the grant of the patent:
**14.06.89 Bulletin 89/24**

(84) Designated Contracting States:
**BE DE FR GB SE**

(56) References cited:
**FR-A-1 161 538**
**FR-A-2 339 533**
**GB-A-1 027 288**
**JP-A-56 089 928**
**JP-A-57 163 544**
**SE-C- 180 772**
**US-A-2 900 665**
**US-A-2 903 388**
**US-A-3 122 598**
**US-A-3 205 889**
**US-A-3 280 238**
**US-A-3 406 873**
**US-A-3 417 899**
**US-A-3 489 829**
**US-A-3 939 239**
**US-A-3 994 412**

(73) Proprietor: **BAXTER INTERNATIONAL INC. (a
Delaware corporation)
One Baxter Parkway
Deerfield Illinois 60015 (US)**

(72) Inventor: **SCHMIDT, Josef
2262 Heathercliff
Libertyville, IL 60048 (US)**
Inventor: **WINCHELL, David, A.
7401 Coventry Drive
Spring Grove, IL 60081 (US)**

(74) Representative: **MacGregor, Gordon et al
ERIC POTTER & CLARKSON 14 Oxford Street
Nottingham, NG1 5BP (GB)**

(56) References cited:
**US-A-4 075 266**
**US-A-4 216 184**
**US-A-4 418 034**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### BACKGROUND ART

In manufacturing sterile containers, such as vinyl containers which contain parenteral solutions and the like, it is conventional to attach to one end of the vinyl film a closure component in the form of a port. The port/closure is typically manufactured by molding it separately from the formation of the vinyl pouch which forms the receptacle portion of the container. After the port/closure is molded, it is bonded to the vinyl film. If an aseptic manufacturing system is required, the closure component will need to be presterilized off-line and aseptically attached to the vinyl film.

We have discovered a novel method for making containers, including a sterile container for medical usage and other types of containers, in which the closure port is extremely simple in construction and is not made separately for subsequent heat welding to the film. In this manner, there are no extra parts, such as separate closure ports, to store and handle, and the contact area of both the port and the receptacle material may be automatically sterilized, without the need to presterilize the closure component off-line and thereafter aseptically attach the sterilized component to the film.

FR-A-1 161 538 discloses the simultaneous forming of a port and a container, but in this prior proposal the port extends into the container, which is disadvantageous. In accordance with the present invention, the port is formed entirely outside the container.

In addition, the present invention provides a method which has been found to be cost-effective in that there is no secondary heat seal operation of the closure port to the receptacle required. Further, a reliable strong seal can be formed in accordance with the method of the present invention and the method has been found to be easily susceptible of use in an aseptic form/fill/seal technique.

Still further, using the method of the present invention, contamination through the port may be obviated and as a result of at least preferred embodiments of the method of the present invention a port cannot be torn from the receptacle portion.

It is, therefore, an object of the present invention to provide a novel method for making containers and container made from this method which is significantly cost-effective and reduces contamination problems.

Other objects and advantages of the present invention will become apparent as the description proceeds.

### DISCLOSURE OF THE INVENTION

In accordance with the present invention, a method is provided for making containers comprising the steps of introducing into a mold cavity a sheet of material adapted to be formed into a pouch, injecting into the mold cavity a molding compound, permitting the molding compound to be bonded with the sheet inside the mold cavity to form a container port in situ, and removing the sheet and bonded molding compound from the mold cavity, whereby the molding compound forms a port.

In the illustrative embodiment, the mold cavity is defined by an injection mold having a path for injecting the molding compound into the mold cavity. The injection mold comprises a female die and a relatively movable male die, with the female and male dies cooperating to define the mold cavity. The method also includes the steps of displacing the sheet with the male die so that the interior shape of the port substantially corresponds to the exterior shape of the male die. In addition, the interior shape of the female die defines the exterior shape of the port.

In the illustrative embodiment, the female die interior opening comprises a generally bucket-shape and the male die exterior comprises a generally hill shape. The female and male die shapes are generally symmetrical about a central axis and the male die exterior shape has a generally sinusoidal cross-sectional configuration.

After the thermoplastic sheet material and the molding compound are bonded together in the mold cavity, they are removed from the mold and the sheet material is folded, heat sealed at the seams and cut to form a container.

In accordance with the present invention, a container is formed generally of folded thermoplastic sheet material and it has a port extending outwardly from one end thereof. The port is formed of a molding compound that is formed into the port shape in a mold cavity and is bonded to the sheet material in situ in the mold cavity.

In one form of the invention, the port includes a flange surrounding a main portion and a pair of opposed wings extending from the flange.

A more detailed explanation of the invention is provided in the following description and claims, and is illustrated in the accompanying drawings.

### BRIEF DESCRIPTION OF DRAWINGS

Figure 1 is a diagrammatic view of a method of making containers in accordance with the principles of the present invention.

Figure 2 is an enlarged view, taken partially in cross-section, of a closure/port formed by the method of Figure 1.

Figure 3 is a perspective view of a container formed by the method illustrated in Figure 1.

Figure 4 is a perspective view of a container portion having a modified-shaped port, constructed in accordance with the principles of the present invention.

Figure 5 is a plan view of the port of Figure 4, with the port wings shown spread open.

### DETAILED DESCRIPTION OF THE ILLUSTRATIVE EMBODIMENT

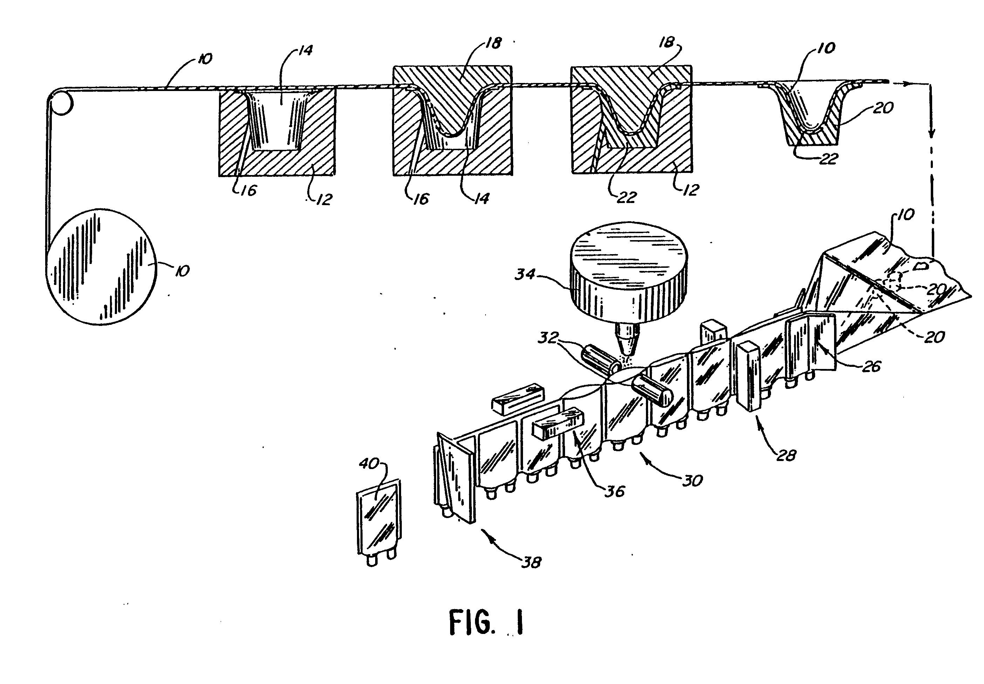

Referring to Figure 1, a continuous sheet of film, preferably polyethylene, is moved over a female die 12 of an injection mold. Female die 12 defines a generally bucket-shaped cavity 14 and also a path 16 for enabling the flow of injected material 22 into cavity 14. Mold cavity 14 generally defines the external shape of the port which will be produced. A male molding die 18 is placed in position and film 10 is heated by male die 18 or the film 10 may be heated prior to entering cavity 14. Heating the film facilitates the shaping and forming of the film to conform to the contours of the molding dies. Male die 18 has a generally hill shape with a generally sinusoidal cross-sectional configuration as illustrated. The female die 12 and male die 18 shapes are generally symmetrical about a central axis.

While film 10 overlies or is within cavity 14, male die 18 is moved into cavity 14 to displace film 10 into the cavity as illustrated. As film 10 remains in the cavity, a rubberized material 22 is injected via path 16 into cavity 14 to form the port and to lend structural rigidity to the exterior of film 10 adjacent the port. At the proper temperature, film 10 and the rubberized material will bond during the injection cycle. Depending on the injection molding method used, the dies may have to be cooled or heated to maintain optimum film-to-rubber bonding temperature.

If the injected material and film 10 are not compatible or do not bond properly to each other, an intermediate member may be carried by film 10 for interposition between film 10 and the molding material in the mold. Additionally, if the fluid to be carried by the container and the rubberized material are not compatible for prolonged exposure with each other, an intermediate film may be interposed between the film 10 and the molding material in the mold.

After the rubberized material and film 10 have become bonded within the mold formed by dies 12 and 18, the resulting bonded product is removed from the mold and a port 20, comprising the rubberized material 22 and the film 10, has been formed. Thus a completed port 20 results once the molding dies are removed.

In the illustrative embodiment, two ports are utilized for each container. Still referring to Figure 1, it is seen that the film with the ports thereon is fed to a film folding horn 26 where the pouch is formed in a conventional manner. To this end, there is a side sealing station 28 wherein the sides 50, 52 are heat sealed, a filling station 30 wherein the plies are pulled apart by vacuum means 32 and the fluid material is introduced into the pouch by filler 34, an end sealing station 36 in which the bottom end 54 is heat sealed and a cutting station 38 in which each unit is separated to form a completed container 40.

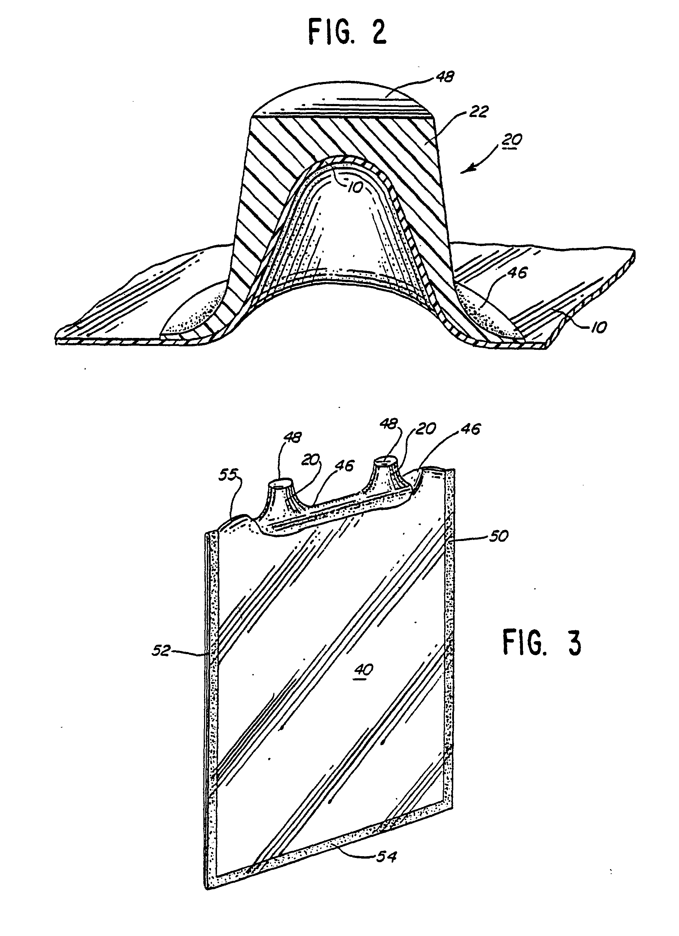

Referring to Figure 2, the resulting port is shown in detail therein. It can be seen that there is an unusually large contact area between the port material 22 and film 10 which assures a strong seal joint. Additionally, thin flexible flange 46 also assures good seal strength quality. Flange 46 also aids to prevent spiking through the side of the container when a spike is inserted into top 48 of the port, through the port and into the bag. There is no need to provide a separate membrane because film 10 functions as the port membrane.

Another advantage of the port of Figure 2 is that the long seal length contact of the port material 22 and film 10 minimizes the chances of contaminants traveling to the spiking site between the two members due to partial poor sealing. Of further significance is the fact that by molding the port in situ, the contact area of the port material 22 and film 10 is sterilized within the mold.

Container 40 is illustrated in Figure 3 and it can be seen that the container comprises a pair of ports 20 formed in accordance with the method illustrated in Figure 1. The receptacle pouch which forms container 40 has a pair of heat sealed side edges 50, 52 and a heat sealed bottom end 54 with ports 20 having been bonded at the opposite end 55.

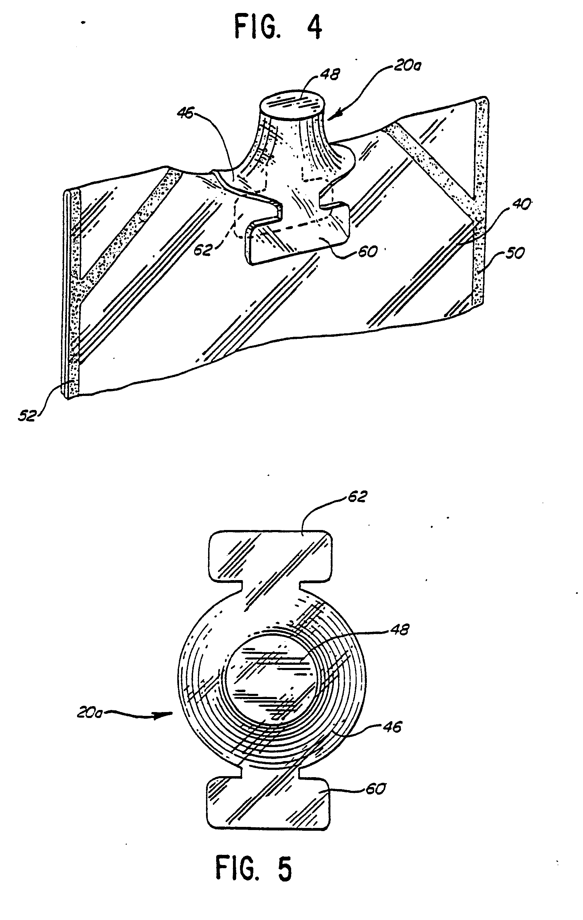

In Figures 4 and 5, a port 20a is shown, having been formed as described above with reference to Figure 1, but having wings 62, 60 extending from flange 46. Wings 62, 60 aid in resisting puncturing of the container 40 during spiking, strengthen the port-to-pouch material seal, provide a position finger grip and keep the fingers away from the spiking area to reduce touch contamination, strengthen the pouch material in the port area to give the pouch a uniform appearance, and enhance the visibility of the port and prevent the port from tilting.

It can be seen that a container has been formed in which the port comprises a molding compound that is formed into the port shape in a mold cavity and is bonded to the sheet material in situ in the mold cavity.

## Claims

1. A method of making a container having a port including the steps of:

introducing into a mold cavity (14) a sheet (10) of material to be formed into a pouch;

injecting into the mold cavity a molding component (22);

permitting the molding compound to be bonded with the sheet inside the mold cavity and to form a port (20) in situ; and

removing the sheet and bonded port from the mold cavity,

characterised in that the port is located entirely on the exterior of the container.

2. A method according to Claim 1, wherein the mold cavity is in the general shape of a container port and the sheet is processed to form the container after removal of the sheet and bonded port from the mold cavity.

3. A method according to Claim 1 or 2, wherein only a portion of the sheet is introduced into the mold cavity and an intermediate bonding member is interposed in the mold between the sheet and the molding compound to aid in the bonding of the molding compound with the sheet.

4. A method according to Claim 1, 2 or 3, wherein the injection mold comprises a female die (12) and a relatively movable male die (18), the female and male dies cooperating to define the mold cavity (14), and including the step of displacing the sheet with the male die whereby the interior shape of the port substantially corresponds to the exterior shape of the male die.

5. A method according to Claim 4, wherein the interior shape of the female die defines the exterior shape of the port.

6. A method according to any preceding claim, wherein the injection mold comprises a female die (12) and a relatively movable male die (18), the female and male dies cooperating to define the mold cavity (14), the female die interior opening comprising a general bucket-shape and the male die exterior comprising a general hill shape.

7. A method according to any one of Claims 4 to 6, wherein the female (12) and the male (18) die shapes are generally symmetrical about a central axis and the male die exterior shape has a generally sinusoidal cross-sectional configuration.

8. A method according to any preceding claim, wherein the sheet comprises a film of thermoplastic material.

9. A container formed generally of thermoplastic sheet material (10) and having a port (20) extending outwardly from one end thereof, the port being formed of a molding compound (22) that has been formed into the port shape and bonded to the sheet material in situ in a mold cavity, characterised in that the port is located entirely on the exterior of the container.

10. A container according to Claim 9, in which the port includes a flange (46) surrounding the main portion and a pair of opposed wings (60, 62) extending from the flange.

**Patentansprüche**

1. Verfahren zur Herstellung eines Behälters mit einer Öffnung mit den Schritten:
Einführen einer Materialfolie (10), aus der ein Beutel gebildet werden soll, in einen Formhohlraum (14);
Injektion einer Formmasse (22) in den Formhohlraum;
Gestattung einer Anbindung der Formmasse an der Folie innerhalb des Formhohlraums unter Ausbildung einer Durchgangsöffnung (20) in situ; und
Entfernung der Folie und der angebundenen Durchgangsöffnung aus dem Formhohlraum;,
dadurch gekennzeichnet, daß die Durchgangsöffnung vollständig außerhalb des Behälters angeordnet ist.

2. Verfahren nach Anspruch 1, wobei der Formhohlraum im wesentlichen die Form einer Behälter-Durchgangsöffnung aufweist, und wobei die Folie zur Ausbildung des Behälters nach Entfernung derselben und der angebundenen Durchgangsöffnung aus dem Formhohlraum bearbeitet wird.

3. Verfahren nach Anspruch 1 oder 2, wobei nur ein Teil der Folie in den Formhohlraum eingeführt wird, und wobei ein Zwischenbindungsmittel innerhalb der Form zwischen der Folie und der Formmasse eingefügt wird zur Unterstützung der Anbindung der Formmasse an der Folie.

4. Verfahren nach Anspruch 1, 2 oder 3, wobei die Spritzform einen negativen Formteil (12) und einen relativ dazu bewegbaren positiven Formteil (18) aufweist derart, daß der negative und positive Formteil unter Definition des Formhohlraums (14) zusammenwirken, und wobei es den weiteren Schritt der Entfernung der Folie mit dem positiven Formteil umfaßt, wodurch die innere Gestalt der Durchgangsöffnung im wesentlichen der äußeren Gestalt des positiven Formteils entspricht.

5. Verfahren nach Anspruch 4, wobei die innere Gestalt des negativen Formteils die äußere Gestalt der Durchgangsöffnung definiert.

6. Verfahren nach einem der vorangehenden Ansprüche, wobei die Spritzform einen negativen Formteil (12) und einen relativ dazu bewegbaren positiven Formteil (18) aufweist derart, daß der negative und positive Formteil unter Definition des Formhohlraums (14) zusammenwirken, wobei die innere Öffnung des negativen Formteils etwa die gestalt einer Mulde aufweist, während das Äußere des positiven Formteils etwa die Gestalt eines Hügels besitzt.

7. Verfahren nach einem der Ansprüche 4 bis 6, wobei die Gestalt des negativen (12) und positiven (18) Formteils jeweils im wesentlichen symmetrisch zu einer Mittelachse ausgebildet ist, und wobei die äußere Gestalt des positiven Formteils eine etwa sinusförmige Querschnittskonfiguration besitzt.

8. Verfahren nach einem der vorangehenden Ansprüche wobei die Folie einen Film aus thermoplastischem Material umfaßt.

9. Behälter, der im wesentlichen aus thermoplastischem Folienmaterial (10) gebildet ist und eine Durchgangsöffnung (20) aufweist, die sich von einem Ende des Behälters nach außen erstreckt, wobei die Durchgangsöffnung durch eine Formmasse (22) gebildet ist, die in die Form der Durchgangsöffnung gebracht und mit dem Folienmaterial in situ innerhalb eines Formhohlraums verbunden worden ist, dadurch gekennzeichnet, daß die Durchgangsöffnung vollständig außerhalb des Behälters angeordnet ist.

10. Behälter nach Anspruch 9, bei dem die Durchgangsöffnung einen den Hauptabschnitt umgebenden Flansch (46) und ein Paar gegenüberliegend ausgebildeter Lappen (60, 62) umfaßt, die sich vom Flansch wegerstrecken.

**Revendications**

1. Procédé de fabrication d'un récipient comportant un orifice qui comprend les opérations consistant à:
introduire dans une cavité de moule (14), une feuille (10) de matière à former selon une poche;
injecter un composant de moulage (22) dans la cavité de moule;

permettre la liaison du composé de moulage avec la feuille à l'intérieur de la cavité de moule pour former un orifice (20) in situ; et

enlever, de la cavité de moule, la feuille et l'orifice lie,

caractérisé en ce que l'orifice est situé entièrement sur l'extérieur du récipient,

2. Procédé suivant la revendication 1, dans lequel la cavité de moule présente la configuration générale d'un orifice de récipient, et la feuille est traitée pour former le récipient après enlèvement, de la cavité de moule, de la feuille et de l'orifice lié.

3. Procédé suivant la revendication 1 ou 2, dans lequel seule une partie de la feuille est introduite dans la cavité de moule et un élément de liaison intermédiaire est interposé dans le moule, entre la feuille et le composé de moulage, pour aider à la liaison du composé de moulage avec la feuille.

4. Procédé suivant la revendication 1, 2 ou 3, dans lequel le moule d'injection comprend une partie femelle (12) et une partie mâle (18) mobile par rapport à la précédente, les parties femelle et mâle coopérant pour définir la cavité de moule (14), et comprenant l'opération de déplacement de la feuille avec la partie mâle de sorte que la forme intérieure de l'orifice correspond sensiblement à la forme extérieure de la partie mâle.

5. Procédé suivant la revendication 4, dans lequel la forme intérieure de la partie femelle définit la forme extérieure de l'orifice.

6. Procédé suivant l'une quelconque des revendications précédentes, dans lequel le moule d'injection comprend une partie femelle (12) et une partie mâle (18) mobile par rapport à la précédente, les parties femelle et mâle coopérant pour définir la cavité de moule (14), l'ouverture intérieure de la partie femelle présentant une forme sensiblement en godet et l'extérieur de la partie mâle présentant une forme sensiblement en bosse.

7. Procédé suivant l'une quelconque des revendications 4 à 6, dans lequel les formes de la partie femelle (12) et de la partie mâle sont sensiblement symétriques par rapport à un axe central, et l'extérieur de la partie mâle présente une configuration de section transversale sensiblement sinusoïdale.

8. Procédé suivant l'une quelconque des revendications précédentes, dans lequel la feuille comprend un film de matière thermoplastique.

9. Récipient constitué sensiblement d'une matière en feuille thermoplastique (10) et comportant un orifice (20) qui s'étent vers l'extérieur à partir d'une extrémité du récipient, l'orifice étant constitué d'un composé de moulage (22) qui a été formé à la configuration de l'orifice et lié à la matière en feuille in situ dans une cavité de moule, caractérisé en ce que l'orifice est situé entièrement sur l'extérieur du récipient.

10. Récipient suivant la revendication 9, dans lequel l'orifice comporte une collerette (46), qui entoure la partie principale, et deux ailes opposées (60, 62) s'étendant à partir de la collerette.

FIG. I

# FIG. 2

# FIG. 3

## FIG. 4

## FIG. 5